(19) Europäisches Patentamt / European Patent Office / Office européen des brevets

(11) **EP 4 322 291 A1**

(12) **EUROPEAN PATENT APPLICATION**
published in accordance with Art. 153(4) EPC

(43) Date of publication:
**14.02.2024 Bulletin 2024/07**

(21) Application number: **23743519.3**

(22) Date of filing: **20.01.2023**

(51) International Patent Classification (IPC):
**H01M 50/105** $^{(2021.01)}$  **B29C 65/00** $^{(2006.01)}$
**B29L 31/00** $^{(2006.01)}$

(52) Cooperative Patent Classification (CPC):
**B29C 65/00; H01M 50/105;** Y02E 60/10

(86) International application number:
**PCT/KR2023/000992**

(87) International publication number:
**WO 2023/140675 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.01.2022 KR 20220010095**

(71) Applicant: **LG Energy Solution, Ltd.
Seoul 07335 (KR)**

(72) Inventor: **YU, Cheol Jin
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **SECONDARY SEALING DEVICE FOR POUCH-TYPE SECONDARY BATTERY**

(57) The present application relates to a secondary sealing device for a pouch-type secondary battery, and according to the secondary sealing device for a pouch-type secondary battery pursuant to the present invention, it aligns the position of the electrode assembly, whereby it is possible to perform correction for the gap between the electrode assembly and the secondary sealing line, and accordingly the gap management is easy, and it is possible to provide a product having the same specifications in terms of electrical characteristics.

[Figure 2]

EP 4 322 291 A1

## Description

## Technical Field

The present invention relates to a secondary sealing device for a pouch-type secondary battery, which relates to, more particularly, a secondary sealing device for a pouch-type secondary battery applied to a process of secondarily sealing the pouch-type secondary battery in which an electrolyte injection step, a primary sealing step, a charge and discharge step, and a degassing step are sequentially performed.

This application claims the benefit of priority based on Korean Patent Application No. 10-2022-0010095 dated January 24, 2022, the disclosure of which is incorporated herein by reference in its entirety.

## Background Art

Secondary batteries capable of repeated charging and discharging may be classified into rectangular secondary batteries, cylindrical secondary batteries, pouch-type secondary batteries, and the like, depending on their manufacturing methods and structures. Among them, the pouch-type secondary battery is widely used because of its simple structure and high electric capacity per unit volume.

In general, the pouch-type secondary battery is manufactured by accommodating an electrode assembly, in which an electrode tab is formed on one side of an electrode body comprising a negative electrode, a positive electrode, an electrolyte, and a separator, inside a pouch, and then injecting an electrolyte solution inside the pouch, primarily sealing an electrolyte injection part, and secondarily sealing it after a degassing process of filling and removing gas.

Meanwhile, the secondary sealing is performed by forming a secondary sealing line to form a gap with the electrode assembly inside the primary sealing line.

The gap is a factor that affects electrical characteristics of the battery in subsequent processes, and the gap management is essentially required to maintain constant specifications between products.

## Disclosure

## Technical Problem

It is a problem to be solved by the present invention to provide a secondary sealing device for a pouch-type secondary battery easy to manage a gap between a secondary sealing line and an electrode assembly.

## Technical Solution

In order to solve the above problem, according to one aspect of the present invention, a secondary sealing device for a pouch-type secondary battery comprising an electrode assembly and a pouch-type case, in which a primary sealing line is formed in an electrolyte injection part located at the rim of the pouch-type case, comprising: a transport part transporting the pouch-type secondary battery; a sealing part forming a secondary sealing line to be positioned between the primary sealing line and the electrode assembly in a state of having a predetermined gap with the electrode assembly; and a gap correction part provided to correct the gap in advance by aligning the position of the pouch-type secondary battery before the secondary sealing line is formed in the sealing part is provided.

In addition, according to another aspect of the present invention, a method of secondarily sealing a pouch-type secondary battery comprising steps of: transporting a pouch-type secondary battery comprising an electrode assembly and a pouch-type case, in which a primary sealing line is formed in an electrolyte injection part located at the rim edge of the pouch-type case, to a secondary sealing location; forming a secondary sealing line at the secondary sealing location to have a gap with the electrode assembly inside the primary sealing line; and correcting the gap in advance by aligning the position of the pouch-type secondary battery transported to the secondary sealing location is provided.

## Advantageous Effects

As described above, according to the secondary sealing device of the pouch-type secondary battery pursuant to the present invention, it aligns the position of the electrode assembly, whereby it is possible to perform correction for the gap between the electrode assembly and the secondary sealing line, and accordingly the gap management is easy, and it is possible to provide a product having the same specifications in terms of electrical characteristics.

## Description of Drawings

Figure 1 is a cross-sectional diagram showing a structure of a pouch-type secondary battery in which a primary sealing line is formed.

Figure 2 is a cross-sectional diagram showing a structure of a pouch-type secondary battery in which a secondary sealing line is formed.

Figure 3 is a diagram showing a configuration of an exemplary device according to the present invention.

Figure 4 is a diagram showing an operating state of an exemplary driving part according to the present invention.

Figure 5 is a diagram for explaining a transporting direction of an exemplary transport part according to the present invention.

Figures 6 to 8 are diagrams for explaining examples of exemplary gap correction according to the present invention.

Figure 9 is a diagram for explaining an operating state of an exemplary sealing part according to the present invention.

**Mode for Invention**

Hereinafter, a secondary sealing device for a pouch-type secondary battery according to one example of the present invention will be described in detail with reference to the accompanying drawings.

In addition, regardless of the reference numerals, the same or corresponding components are given by the same or similar reference numerals, and duplicate descriptions thereof will be omitted, and for convenience of explanation, the size and shape of each component as shown can be exaggerated or reduced.

The present invention relates to a secondary sealing device for a pouch-type secondary battery comprising an electrode assembly and a pouch-type case, in which a primary sealing line is formed in an electrolyte injection part located at the rim of the pouch-type case.

A secondary sealing device for a pouch-type secondary battery related to one example of the present invention may be a device for secondarily sealing a pouch-type secondary battery that an electrolyte injection process, and charging and discharging, and degassing processes have been performed sequentially.

The first sealing line is formed in a primary sealing process, and the primary sealing process is performed after the electrolyte injection is completed.

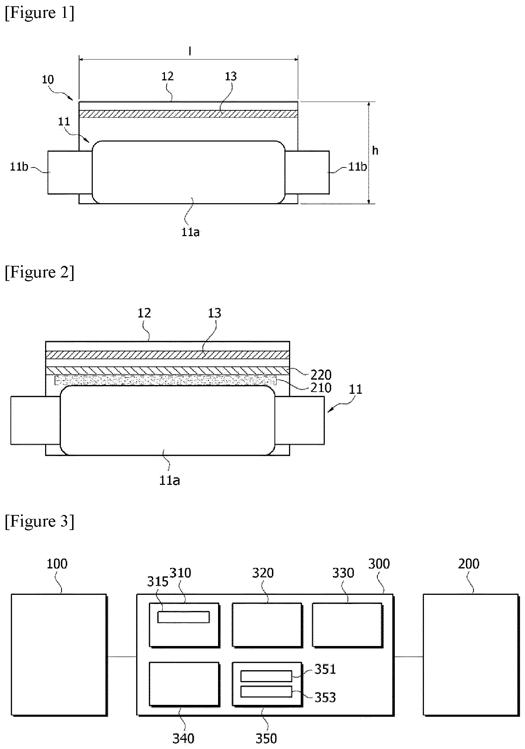

Figure 1 is a cross-sectional diagram showing a structure of a pouch-type secondary battery (10) in which a primary sealing line (13) is formed.

Referring to Figure 1, the pouch-type secondary battery (10) after the primary sealing process has predetermined length (l), height (h) and thickness (t). In addition, the pouch-type secondary battery (10) comprises an electrode assembly (11), in which an electrode tab (11b) is formed on one side of an electrode body (11a) including a negative electrode, a positive electrode, an electrolyte and a separator, and a pouch-type case (12) surrounding the electrode assembly (11). At this time, the primary sealing line (13) is formed in the electrolyte injection part located at the rim of the pouch-type case (12).

A secondary sealing device for a pouch-type secondary battery (10) related to one example of the present application is a secondary sealing device for a pouch-type secondary battery (10) comprising an electrode assembly (11) and a pouch-type case (12), in which a primary sealing line (13) is formed in an electrolyte injection part located at the rim of the pouch-type case (12).

In this document, the primary and secondary sealing lines mean bonding lines for sealing the electrode assembly (11) inside the pouch-type case (12), and are formed in the rim part of the pouch-type case (12) to surround the electrode assembly (11).

Figure 2 is a cross-sectional diagram showing a structure of a pouch-type secondary battery in which a secondary sealing line is formed, and Figure 3 is a diagram showing a configuration of an exemplary device according to the present invention.

The secondary sealing device for a pouch-type secondary battery related to one example of the present invention comprises a transport part (100) transporting the pouch-type secondary battery; a sealing part (200) forming a secondary sealing line (220) so that the secondary sealing line (220) is positioned between the primary sealing line (13) and the electrode assembly (11), and the secondary sealing line (220) has a predetermined gap (210) with the electrode assembly (11); and a gap correction part (300) provided to correct the gap (210) in advance by aligning the position of the pouch-type secondary battery (10) before the secondary sealing line (220) is formed in the sealing part (200).

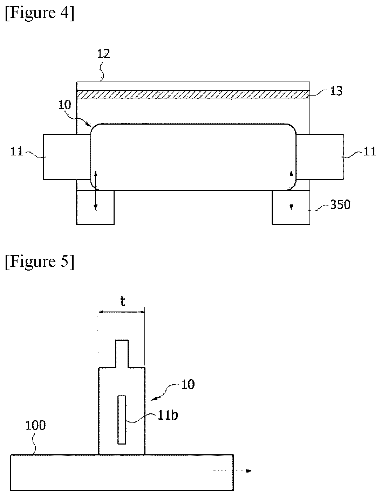

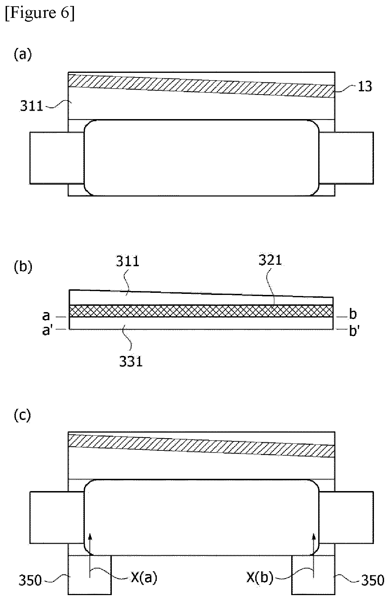

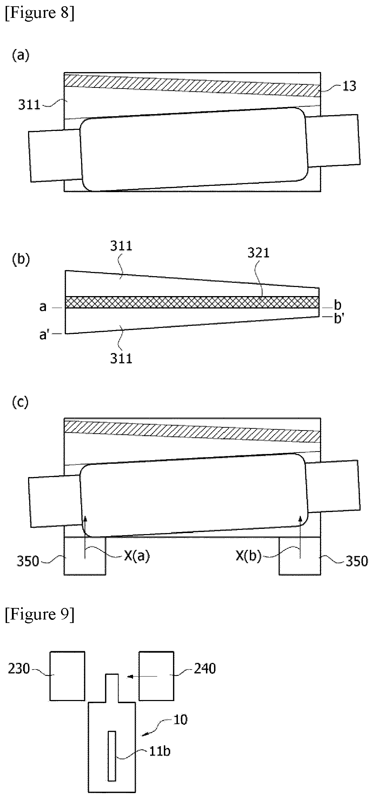

Figure 4 is a diagram showing an operating state of an exemplary driving part according to the present invention, Figure 5 is a diagram for explaining a transporting direction of an exemplary transport part according to the present invention, Figures 6 to 8 are diagrams for explaining examples of exemplary gap correction according to the present invention, and Figure 9 is a diagram for explaining an operating state of an exemplary sealing part according to the present invention.

The secondary sealing device for the pouch-type secondary battery comprises a transport part (100), a sealing part (200), and a gap correction part (300).

The transport part (100) transports the pouch-type secondary battery (10) to a secondary sealing location. The transport part (100) serves to transport the pouch-type secondary battery that the degassing process has completed to a secondary sealing location. In this instance, the secondary sealing location means a location where the sealing part (200) is provided.

The sealing part (200) forms the secondary sealing line (220) to have the gap (210) with the electrode assembly (11) inside the primary sealing line (13) at the secondary sealing location. The sealing part (200) forms a secondary sealing line (220) to be located between the primary sealing line (13) and the electrode assembly (11) in a state of having a predetermined gap (210) with the electrode assembly (11). That is, the secondary sealing line (220) has a predetermined gap (210) with the electrode assembly (11), and is located between the primary sealing line (13) and the electrode assembly (11).

The secondary sealing line (220) may form the respective predetermined intervals with the primary sealing line (13) as well as the electrode assembly (11). However, in the present invention, the term 'gap (210)' shall mean a gap between the secondary sealing line (220) and the electrode assembly (11). For example, the gap (210) has a constant interval between the secondary sealing line (220) and the electrode assembly (11), and the interval is the distance between the lower end of the secondary sealing line (220) and the upper end of the electrode assembly (11) based on Figure 2, which may be defined based on the shortest distance between the secondary sealing line (220) and the electrode assembly (11).

The gap correction part (300) aligns the position of the pouch-type secondary battery (10) transported to the secondary sealing location to perform the correction of the gap (210) in advance.

In the present invention, the gap correction means correcting an error between a gap of a standard product (product having standard specifications) and a gap of a currently produced product. The gap of the standard product may vary depending on the product model. For example, when the gap of a standard product is 2 mm and the gap of the currently produced product is above or below 2 mm, the correction of the currently produced product to have a gap of 2 mm is referred to as gap correction.

Such a gap (210) may be adjusted by a method of adjusting the secondary sealing position of the sealing part (200), or adjusting the position of the pouch-type secondary battery (10) located in the sealing part (200).

In the present invention, the sealing part (200) is provided to perform secondary sealing at the same preset position (or fixed coordinates), and the correction of the gap (210) is performed by changing the position of the pouch-type secondary battery (10) before forming the secondary sealing line (220).

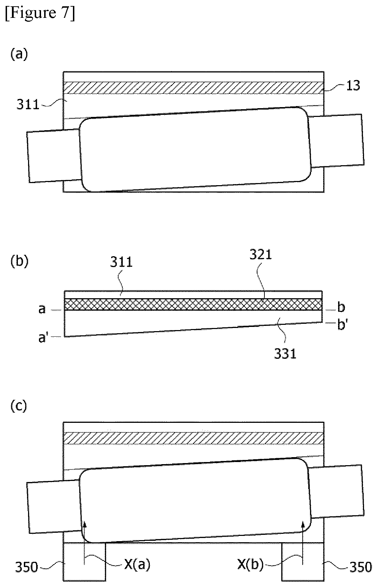

Referring to Figures 6 to 8, Figure 6 shows an example in which the primary sealing line is formed asymmetrically, Figure 7 shows an example in which the electrode assembly is formed asymmetrically, and Figure 8 shows an example in which the primary sealing line and the electrode assembly are formed asymmetrically.

Referring to Figures 6(a), 7(a) and 8(a), the formation position of the primary sealing line (13) or the position of the electrode assembly may differ for each product (meaning a pouch-type secondary battery) due to tolerances of mechanical parts or dimensional errors of the electrode assembly, and the like. Such a difference induces error occurrence in gaps between products in the process of forming the secondary sealing line.

The gap is a factor that affects the electrical characteristics of the battery, so that when an error in the gap occurs, there is a problem that specifications between products differ. Accordingly, the secondary sealing device according to the present invention can provide products having the same specifications by performing gap correction in advance before performing secondary sealing to minimize gap errors that may occur between products.

In one example, the gap correction part (300) may comprise an image providing part (310), an image inserting part (320), an image analyzing part (330), a calculating part (340), and a driving part (350).

The image providing part (310) may provide a vertical cross-sectional image (311) of the space between the primary sealing line (13) and the electrode assembly (11) (see Figures 6(a), 7(a) and 8(a)). The vertical cross-section image is provided in a 2D form. The upper end of the vertical cross-section image (311) corresponds to the lower end of the primary sealing line (13), and the lower end of the vertical cross-section image (311) corresponds to the upper end of the electrode assembly (11).

The image inserting part (320) may insert a virtual secondary sealing line (321) into the vertical cross-section image (311) at fixed coordinates (see Figures 6(b), 7(b) and 8(b)). The virtual secondary sealing line (321) may mean a cross-sectional image of the secondary sealing line (220) really formed in the sealing part (200); the coordinates may be coordinates for the formation position of the secondary sealing line (220) really formed in the sealing part (200); and the fixed coordinates may be coordinates for the formation position of the secondary sealing line (220) in the standard product.

That is, as described above, the sealing part (200) is provided to perform the secondary sealing at the same preset position (or fixed coordinates), so that the image inserting part (320) may insert the virtual secondary sealing line (321) into the vertical section image (311) at fixed coordinates. At this time, the coordinates for the formation position of the secondary sealing line (220) are coordinates optionally settable by a use, which may be set differently for each product model.

Referring to Figures 3, 6(b), 7(b) and 8(b), the image analyzing part (330) may analyze gap errors in the vertical cross-sectional image (311) into which the virtual secondary sealing line (321) is inserted. In the gap error, the errors are analyzed by comparing it with the gap optionally set by a user (which may vary for each required specification of the product).

The calculating part (340) may calculate a movement distance of the pouch-type secondary battery required for gap correction from the analyzed results. The calculating part (340) may calculate the movement distance of the pouch-type secondary battery by the gap error.

The driving part (350) may move the pouch-type secondary battery based on the calculated movement distance. As the pouch-type secondary battery moves through the driving part (350), the gap correction is performed between the virtual secondary sealing line (321) and the electrode assembly (11), so that a constant gap between products can be formed. The secondary sealing device according to the present invention has an advantage of facilitating gap management through the gap correction as above.

In one example, the calculating part (340) may calculate the movement distances of both ends of the pouch-type secondary battery along the longitudinal direction (l, see Figure 1). For example, referring to Figures 6(b), 7(b) and 8(b), the calculating part (340) may calculate a ~ a' (hereinafter, ⓐ) and b ~ b' (hereinafter, ⓑ) distances, respectively, and calculate the movement distances (X(a), X(b)) of the pouch-type secondary battery through the standard gap (hereinafter, Y) optionally set by the user as in Equation 1 below.

[Equation 1]

$$Y = ⓐ + X(a)$$

$$Y = ⓑ + X(b)$$

The X(a) is a transport distance of one end of the pouch-type secondary battery corresponding to the distance a ~ a' in the vertical cross-sectional image (311), and the X(b) means a transport distance of the other end of the pouch-type secondary battery corresponding to the distance b ~ b' in the vertical cross-sectional image (311).

That is, when the transport distances required for gap correction are each calculated through the calculating part (340), the driving part (350) can transport both ends of the pouch-type secondary battery in the longitudinal direction along the height direction (h, see Figure 1).

In one embodiment, the driving part (350) may comprise a ball screw (351) disposed at both ends of the pouch-type secondary battery along the longitudinal direction, and a servo motor (353) that drives the ball screw (351).

The image providing part (310) may comprise a vision camera (315). The vision camera (315) may provide the vertical sectional image (311) based on the contrast difference.

The transport part (100) may comprise a seating part on which the pouch-type secondary battery is vertically seated so that the pouch-type secondary battery is transported in the thickness direction (t).

Referring to Figure 5, the pouch-type secondary battery (10) is transported in an upright state in the transport part (100), and in the present application, the upright state means a state where the pouch-type secondary battery is disposed along the height direction (h) on the seating part so that the electrode assembly (11) is located at the lower part and the primary sealing line (13) is located at the upper part.

When the pouch-type secondary battery is transported in the longitudinal direction (l) or the height direction (h) of the pouch-type secondary battery, there is a disadvantage that the layout becomes long. Unlike this, referring to Figure 5, as the transport part (100) transports the pouch-type secondary battery in the thickness (t) direction, which is shorter than the length (l) or height (h), it has an effect of minimizing the layout.

Referring to Figure 9, the sealing part (200) is a device forming a bonding line by heating and pressurizing the rim part of the pouch-type case surrounding the electrode assembly. The sealing part (200) may comprise a support part (230) disposed to face one side of the pouch-type secondary battery (10), and a sealing pressurization part (240) disposed to face one side of the pouch-type secondary battery (10) and forming a secondary sealing line by pressurizing the other side of the pouch-type secondary battery (10) while moving toward the support part (230). The sealing pressurization part (240) is provided to heat and pressurize a region in contact with the pouch-type case. The support part (230) may be provided to heat a region in contact with the pouch-type case.

Referring to Figure 9, similarly to the method of being transported in the transport part (100), the pouch-type secondary battery (10) is positioned in an upright state in the sealing part (200), and the sealing pressurization part (240) is provided to move toward the support part (230) along the thickness direction (t) of the pouch-type secondary battery.

In addition, the support part (230) does not move at the fixed position, and only the sealing pressurization part (240) is designed to move in a direction closer to or farther from the support part (230) along a certain moving line. Even in this instance, the moving line of the sealing pressurization part (240) is fixedly set so that the secondary sealing is equally performed at the virtual fixed coordinates.

As described above, in the sealing part (200), the pouch-type secondary battery (10) is in an upright state along the height direction (h). In this state, the driving part (350) moves both ends of the pouch-type secondary battery in the longitudinal direction (l, see Figure 1) along the height direction (h, see Figure 1) by a transport distance required for gap correction. As a result, the gap correction between the electrode assembly and the secondary sealing line may be performed before the secondary sealing process is performed.

In addition, the present application relates to a method of secondarily sealing a pouch-type secondary battery. The method is performed using the above-described secondary sealing device for the pouch-type secondary battery. Accordingly, descriptions overlapping with the foregoing will be omitted below.

Specifically, the secondary sealing method of the pouch-type secondary battery comprises a step of transporting a pouch-type secondary battery comprising an electrode assembly and a pouch-type case, in which a primary sealing line is formed in an electrolyte injection part located at the rim edge of the pouch-type case, to a secondary sealing location. Also, the secondary sealing method of the pouch-type secondary battery comprises a step of forming a secondary sealing line at the secondary sealing location to have a gap with the electrode assembly inside the primary sealing line. In addition, the secondary sealing method of the pouch-type secondary battery comprises a step of correcting the gap in advance by aligning the position of the pouch-type secondary battery transported to the secondary sealing location.

In one example, the step of performing the gap correction in advance comprises a step of providing a vertical cross-sectional image of the space between the primary sealing line and the electrode assembly, comprises a step of inserting a virtual secondary sealing line into the vertical cross-sectional image at fixed coordinates, comprises a step of analyzing gap errors in the vertical cross-sectional image into which the virtual secondary sealing line is inserted, comprises a step of calculating a movement distance of the pouch-type secondary battery required for gap correction from the analyzed image, and comprises a step of moving the pouch-type secondary battery based on the calculated movement distance.

The calculating step may calculate the movement distances of both ends of the pouch-type secondary battery along the longitudinal direction.

Then, the transporting step may comprise a step of vertically seating the pouch-type secondary battery so that the pouch-type secondary battery is transported in the thickness direction.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

**Industrial Applicability**

According to the secondary sealing device of the pouch-type secondary battery pursuant to the present invention, it aligns the position of the electrode assembly, whereby it is possible to perform correction for the gap between the electrode assembly and the secondary sealing line, and accordingly the gap management is easy, and it is possible to provide a product having the same specifications in terms of electrical characteristics.

**Claims**

1. A secondary sealing device for a pouch-type secondary battery comprising an electrode assembly and a pouch-type case, in which a primary sealing line is formed in an electrolyte injection part located at the rim of the pouch-type case, comprising:

   a transport part transporting the pouch-type secondary battery;
   a sealing part forming a secondary sealing line to be positioned between the primary sealing line and the electrode assembly in a state of having a predetermined gap with the electrode assembly; and
   a gap correction part provided to correct the gap in advance by aligning the position of the pouch-type secondary battery before the secondary sealing line is formed in the sealing part.

2. The secondary sealing device for a pouch-type secondary battery according to claim 1, wherein the gap correction part comprises:

   an image providing part providing a vertical cross-sectional image of the space between the primary sealing line and the electrode assembly;
   an image inserting part inserting a virtual secondary sealing line into the vertical cross-section image at fixed coordinates;
   an image analyzing part analyzing gap errors in the vertical cross-sectional image into which the virtual secondary sealing line is inserted;
   a calculating part calculating a movement distance of the pouch-type secondary battery required for gap correction from the analyzed result; and
   a driving part moving the pouch-type secondary battery based on the calculated movement distance.

3. The secondary sealing device for a pouch-type secondary battery according to claim 2, wherein the calculating part calculates the moving distances of both ends of the pouch-type secondary battery along the longitudinal direction.

4. The secondary sealing device for a pouch-type secondary battery according to claim 3, wherein the driving part comprises:

   a ball screw disposed at both ends of the pouch-type secondary battery along the longitudinal direction; and
   a servo motor that drives the ball screw.

5. The secondary sealing device for a pouch-type secondary battery according to claim 2, wherein the image providing part comprises a vision camera.

6. The secondary sealing device for a pouch-type secondary battery according to claim 1, wherein the transport part comprises a seating part on which the pouch-type secondary battery is vertically seated so that the pouch-type secondary battery is transported in the thickness direction.

7. The secondary sealing device for a pouch-type secondary battery according to claim 1, wherein the sealing part comprises:

a support part disposed to face one side of the pouch-type secondary battery; and
a sealing pressurization part disposed to face one side of the pouch-type secondary battery and forming a secondary sealing line by pressurizing the other side of the pouch-type secondary battery while moving toward the support part.

8. The secondary sealing device for a pouch-type secondary battery according to claim 7, wherein

in the sealing part, the pouch-type secondary battery is positioned in an upright state, and
the sealing pressurization part is provided to move toward the support part along the thickness direction of the pouch-type secondary battery.

9. A method of secondarily sealing a pouch-type secondary battery comprising steps of:

transporting a pouch-type secondary battery comprising an electrode assembly and a pouch-type case, in which a primary sealing line is formed in an electrolyte injection part located at the rim edge of the pouch-type case, to a secondary sealing location;
forming a secondary sealing line at the secondary sealing location to have a gap with the electrode assembly inside the primary sealing line; and
correcting the gap in advance by aligning the position of the pouch-type secondary battery transported to the secondary sealing location.

10. The method of secondarily sealing a pouch-type secondary battery according to claim 9, wherein the step of performing the gap correction in advance comprises steps of:

providing a vertical cross-sectional image of the space between the primary sealing line and the electrode assembly;
inserting a virtual secondary sealing line into the vertical cross-sectional image at fixed coordinates;
analyzing gap errors in the vertical cross-sectional image into which the virtual secondary sealing line is inserted;
calculating a movement distance of the pouch-type secondary battery required for gap correction from the analyzed image; and
moving the pouch-type secondary battery based on the calculated movement distance.

11. The method of secondarily sealing a pouch-type secondary battery according to claim 10, wherein the calculating step calculates the movement distances of both ends of the pouch-type secondary battery along the longitudinal direction.

12. The method of secondarily sealing a pouch-type secondary battery according to claim 9, wherein the transporting step comprises
a step of vertically seating the pouch-type secondary battery so that the pouch-type secondary battery is transported in the thickness direction.

[Figure 1]

[Figure 2]

[Figure 3]

[Figure 4]

[Figure 5]

[Figure 6]

(a)

311 — 

— 13

(b)

311          321

a —
a' —           
                    — b
                    — b'

331

(c)

350 —      X(a)      X(b)      — 350

[Figure 7]

(a)

(b)

(c)

[Figure 8]

(a)

311

13

(b)

311

321

a

b

a'

b'

311

(c)

350

X(a)

X(b)

350

[Figure 9]

230

240

10

11b

## INTERNATIONAL SEARCH REPORT

| International application No. |
|---|
| **PCT/KR2023/000992** |

### A. CLASSIFICATION OF SUBJECT MATTER

**H01M 50/105**(2021.01)i; **B29C 65/00**(2006.01)i; B29L 31/00(2006.01)n

According to International Patent Classification (IPC) or to both national classification and IPC

### B. FIELDS SEARCHED

Minimum documentation searched (classification system followed by classification symbols)

H01M 50/105(2021.01); H01M 10/04(2006.01); H01M 2/02(2006.01); H01M 50/10(2021.01); H01M 50/20(2021.01); H01M 50/30(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 파우치 배터리(pouch battery), 실링(sealing), 갭(gap), 보정(calibration), 라인(line)

### C. DOCUMENTS CONSIDERED TO BE RELEVANT

| Category* | Citation of document, with indication, where appropriate, of the relevant passages | Relevant to claim No. |
|---|---|---|
| A | KR 10-2018-0060821 A (LG CHEM, LTD.) 07 June 2018 (2018-06-07) See paragraphs [0028]-[0031]; and figures 4-6. | 1-12 |
| A | KR 10-2017-0019211 A (LG CHEM, LTD.) 21 February 2017 (2017-02-21) See paragraphs [0001]-[0072]; and figures 1-8. | 1-12 |
| A | KR 10-2018-0093792 A (LG CHEM, LTD.) 22 August 2018 (2018-08-22) See paragraphs [0001]-[0060]; and figures 1-9. | 1-12 |
| A | KR 10-2013-0044705 A (SK INNOVATION CO., LTD.) 03 May 2013 (2013-05-03) See paragraphs [0010]-[0038]; and figures 1-8. | 1-12 |
| A | KR 10-2016-0118931 A (LG CHEM, LTD.) 12 October 2016 (2016-10-12) See paragraphs [0001]-[0049]; and figures 1-11. | 1-12 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 May 2023** | **04 May 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/000992**

| Patent document cited in search report | | | Publication date (day/month/year) | Patent family member(s) | | | Publication date (day/month/year) |
|---|---|---|---|---|---|---|---|
| KR | 10-2018-0060821 | A | 07 June 2018 | KR | 10-2256131 | B1 | 25 May 2021 |
| KR | 10-2017-0019211 | A | 21 February 2017 | KR | 10-2091768 | B1 | 20 March 2020 |
| KR | 10-2018-0093792 | A | 22 August 2018 | KR | 10-2381443 | B1 | 31 March 2022 |
| KR | 10-2013-0044705 | A | 03 May 2013 | KR | 10-1730338 | B1 | 27 April 2017 |
| KR | 10-2016-0118931 | A | 12 October 2016 | CN | 107408720 | A | 28 November 2017 |
| | | | | CN | 107408720 | B | 18 October 2019 |
| | | | | EP | 3249732 | A1 | 29 November 2017 |
| | | | | EP | 3249732 | A4 | 21 November 2018 |
| | | | | EP | 3249732 | B1 | 02 June 2021 |
| | | | | JP | 2018-511912 | A | 26 April 2018 |
| | | | | JP | 6549243 | B2 | 24 July 2019 |
| | | | | KR | 10-1852250 | B1 | 26 April 2018 |
| | | | | US | 10547034 | B2 | 28 January 2020 |
| | | | | US | 2018-0047950 | A1 | 15 February 2018 |
| | | | | WO | 2016-159607 | A1 | 06 October 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220010095